(19) **Europäisches Patentamt**
**European Patent Office**
**Office européen des brevets**

(11) **EP 2 685 698 A1**

(12) **EUROPEAN PATENT APPLICATION**

(43) Date of publication:
**15.01.2014 Bulletin 2014/03**

(51) Int Cl.:
**H04L 29/08** (2006.01)

(21) Application number: **13176299.9**

(22) Date of filing: **12.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.07.2012 IN CH28182012**

(71) Applicant: **Samsung Electronics Co., Ltd Gyeonggi-do 443-742 (KR)**

(72) Inventors:
• **Raju, Prashanth Srinivasa**
**560093 Bangalore (IN)**
• **Cheruvath, Muhammad Saheer**
**560093 Bangalore (IN)**
• **Kattimani, Muralidhar**
**560093 Bangalore (IN)**

(74) Representative: **Birchenough, Lewis**
**Harrison Goddard Foote LLP**
**Saviour House**
**9 St Saviourgate**
**York YO1 8NQ (GB)**

(54) **Smart Scheduled Sync Method for Sync Applications**

(57)    A method and system optimize the time interval for a scheduled synchronization or sync between entities. The optimization of the scheduled sync may be obtained by dynamically varying the sync interval time instead of a fixed preset time interval. The method varies the scheduled sync interval based on the parameters which may include data traffic used in the sync application, a battery level status, a network type, and a roaming status. Using the method, the number of unsuccessful sync requests may be reduced.

FIG.1

## Description

## TECHNICAL FIELD

The disclosure relates to the synchronization of data between a client and a server, and more particularly relates to scheduled sync functionality.

## BACKGROUND

With the advancements in technology, electronic devices play a key role in day-to-day life. The affordability of the electronic devices aided by the advancement in technology has enabled people belonging to even a moderate income range to own a smart phone. Moreover, the introduction of a user friendly operating system into the consumer handset market enables the common man to use a smart phone more efficiently than ever before. As a result of such developments, the penetration of such devices all over the world has reached unimaginable limits.

Although smart phones have many applications in multimedia, entertainment, gaming and so on, the use of these devices is still to achieve communication, using voice and/or data. Among the data communication applications being used, client mail synchronization (sync) and socializing applications are the most popular applications. However, most users of smart phones do have at least an email account, and would want to access these services on their handheld devices, which has resulted in the vast usage of sync mail services among the common public.

The client mail sync services include sync email items from a server to an electronic device, and the personal information management (PIM) data associated with the email account, which includes items such as calendar, contacts, tasks, notes, and so on. These items may be synced in a number of possible ways. Synchronization may be performed by protocols, such as POP (Post Office Protocol), SMTP(Simple Mail Transfer Protocol) for syncing mails, and a device synchronization method such as MICROSOFT EXCHANGE ACTIVESYNC, commercially available from MICROSOFT CORPORATION, which may be used for syncing mails as well as PIM items. In addition, another feature of these sync mail applications is that such sync mail applications can automatically sync changes from the server without the user's intervention.

In an existing system of a scheduled sync in the related art, there exists synchronization of items between two entities, based on a preset time interval. In the existing system in the related art, the sync is performed for a preset interval such as 5, 10, or N time units, where N is an integer. Upon expiration of this preset time, a sync command is automatically issued for synchronizing the data in a next preset time interval. Such automatic synchronization occurs repeatedly according to the preset interval to synchronize the data items between the entities.

In the existing system, sync is unintelligently performed for all the item classes/collections every time, which leads to more network data usage, and leads to increased data charges. Further, in the existing system, there is a chance for an empty sync during a preset time interval. Such an unsuccessful or empty sync performed at a constant time interval may consume more battery power and increase data usage and costs.

Due to such reasons, it is evident that the existing system in the related art lacks the ability to dynamically change the scheduled time interval and also to dynamically choose the items to be synced, while performing synchronization of data items between the entities.

## SUMMARY

The disclosure includes a method and system to optimize the time interval for scheduled sync between the entities.

In addition, the disclosure includes a method and system that adaptively varies the scheduled sync over the course of time.

The disclosure also includes a method to dynamically compute the sync interval based on parameters such as data traffic, battery status, network type, and roaming status.

Furthermore, the disclosure also includes a method to dynamically select the eligible item types that are to be included in the next scheduled sync, based on the corresponding data traffic recorded previously for the respective item types.

In addition, the disclosure includes a method for scheduling a sync interval of items between entities, with the method including determining a status of a parameter of the entities, computing a scheduled sync interval based on the parameter, identifying a weighting factor for the parameter, estimating a next sync interval adaptively based on the weighting factor and the computed sync interval for the parameter, and performing at least one of selection or omission of the items adaptively in the sync interval based on the parameter.

The disclosure also includes a computer program product embodied in a computer readable medium including program instructions which, when executed by a processor, cause the processor to perform a method for scheduling sync interval of items, with the method including determining a status of a parameter, with the parameter including at least one of data traffic or battery status, and computing a scheduled sync interval based on the parameter, identifying a weighting factor for the one parameter, estimating a next sync interval adaptively based on the weighting factor and the computed sync interval for the parameter, and performing at least one of selection or omission of the items adaptively in the sync interval based on the parameter.

Furthermore, the disclosure includes an electronic device for scheduling a sync interval adaptively, with the electronic device including an integrated circuit which includes at least one processor, and at least one memory having a computer program code within the circuit, the at least one memory and the computer program code which, with the at least one processor, causes the electronic device to determine the status of a parameter, with the parameter including at least one of data traffic or a battery status, and compute a scheduled sync interval based on the parameter, identify a weighting factor for the parameter, estimate a next sync interval adaptively based on the weighting factor and the computed sync interval the parameter, and perform at least one of selection or omission of the items adaptively in the sync interval based on the parameter.

These aspects and other aspects of the disclosure will be better appreciated and understood when described in conjunction with the description and the accompanying drawings. It should be understood, however, that the descriptions, while indicating embodiments and numerous specific details of the disclosure, are given by way of illustration and not of limitation. Many changes and modifications may be included in the embodiments of the disclosure without departing from the disclosure, and the embodiments of the disclosure include all such modifications.

**BRIEF DESCRIPTION OF THE DRAWINGS**

The disclosure is illustrated in the accompanying drawings, throughout which the same or similar reference letters indicate corresponding parts in the various figures. The embodiments of the disclosure will be better understood from the description with reference to the drawings, in which:

> FIG. 1 illustrates an overall communication between a server and an electronic device, according to embodiments of the disclosure;
> FIG. 2 illustrates a block diagram of the electronic device with various modules, according to embodiments of the disclosure;
> FIG. 3 illustrates a flow diagram representing the overview of computing a scheduled sync interval, according to embodiments of the disclosure;
> FIG. 4 illustrates a flow diagram representing the process of computing a scheduled sync interval '$t_D$' based on previous data traffic, according to embodiments of the disclosure;
> FIG. 5 illustrates a flow diagram representing the process of computing a scheduled sync interval '$t_B$' based on a current battery status of the electronic device, according to the embodiments of the disclosure;
> FIG. 6 illustrates a flow diagram representing the process of computing a scheduled sync interval '$t_N$' based on a current network type of the electronic device, according to the embodiments of the disclosure;

FIG. 7 illustrates a flow diagram representing the process of computing a scheduled sync interval '$t_R$' based on a current roaming status of the electronic device, according to the embodiments of the disclosure;
FIG. 8 illustrates a flow diagram representing the process of computing a final scheduled sync interval, according to the embodiments of the disclosure;
FIG. 9 illustrates a schematic diagram illustrating an implementation of an adaptive sync interval time, according to the embodiments of the disclosure; and
FIG. 10 illustrates a computing environment for implementing the disclosure, according to the embodiments of the disclosure.

**DETAILED DESCRIPTION**

The disclosure is described with reference to the accompanying drawings. In the description of the disclosure, a detailed description of known related functions and components may be omitted to avoid unnecessarily obscuring the subject matter of the disclosure. The disclosure may, however, be embodied in many different forms and should not be construed as limited to the embodiments. In addition, terms of the disclosure, which are defined with reference to the functions of the disclosure, may be implemented differently depending on a user or operator's intention and practice. Therefore, the terms should be understood on the basis of the disclosure throughout the specification. The principles and features of the disclosure may be employed in varied and numerous embodiments without departing from the disclosure.
The same reference numbers are used throughout the drawings to refer to the same or similar parts. Furthermore, although the drawings represent embodiments of the disclosure, the drawings are not necessarily to scale and certain features may be exaggerated or omitted in order to more clearly illustrate and describe the disclosure.
Among the terms in the disclosure, an electronic device, a terminal, a mobile device, a portable device, etc. refers to any kind of device capable of processing data which is transmitted or received to or from any external entity. The electronic device, the terminal, the mobile device, the portable device, etc. may display icons or menus on a screen to which stored data and various executable functions are assigned or mapped. The electronic device, the terminal, the mobile device, the portable device, etc. may include a computer, a notebook, a tablet PC, a cellphone, and any known type of electronic device.
Among the terms in the disclosure, a screen refers to a display or other output devices which visually display information to the user, and which optionally may include a touch screen or touch panel capable of receiving and electronically processing tactile inputs from a user using a stylo, a finger of the user, or other techniques for conveying a user selection from the user to the display or to other output devices.

Among the terms in the disclosure, an icon refers to a graphical element such as a figure or a symbol displayed on the screen of the electronic device such that a user can easily select a desired function or data. In particular, each icon has a mapping relation with any function being executable in the electronic device or with any data stored in the electronic device and is used for processing functions or selecting data in the electronic device. When a user selects one of the displayed icons, the electronic device identifies a particular function or data associated with the selected icon. Then the electronic device executes the identified function or displays the identified data.

Among the terms in the disclosure, data refers to any kind of information processed by the electronic device, including text and/or images received from any external entities, messages transmitted or received, and information created when a specific function is executed by the electronic device.

Among the terms in the disclosure, an entity refers to an electronic device, an electronic apparatus, or an electronic system, such as a mobile device or a server.

The embodiments of the disclosure include a method and system for optimizing a scheduled sync by dynamically varying the sync time instead of a fixed preset time interval. The optimization of the scheduled sync is based on parameters including data traffic, battery status, roaming status, and network type. Further, the embodiments include methods for calculating the varying sync time between the entities by using each of the parameters.

The method includes sub-divisions which compute parameter specific sync interval times. These parameter specific sync interval times are then adjusted accordingly based on weighting factors in order to compute a final next sync interval time. The method and system of the disclosure may include more or fewer parameters to determine a scheduled sync interval time.

Further, the method uses predetermined or preset minimum time ($t_{min}$) and maximum time ($t_{max}$) threshold values for computing the next sync intervals, to ensure that no collection or item class is synchronized very frequently or unnecessarily, and also that no collection or item class is ignored from synchronization. In an embodiment, the collection or the item classes represents the items to be synced such as an electronic inbox, an electronic calendar, electronic file folders, etc. of the entities.

In an embodiment, the threshold values can either be preset values or can be user set parameters. Hence, in effect, the number of sync requests and unnecessary data exchanges between the server and client is greatly reduced. Also, the number of sync request sent to the server is greatly reduced, and so the burden on the server is reduced to a great extent, resulting in more efficient and quicker server responses.

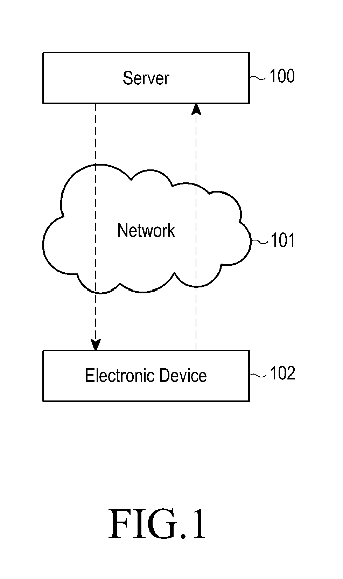

Referring now to FIGS. 1 through 10, where similar reference characters refer to corresponding features throughout the drawings, the disclosure is illustrated.

FIG. 1 illustrates an overall communication between a server and an electronic device, according to embodiments of the disclosure. As shown in FIG. 1, a server 100, a network 101 and an electronic device 102 are interconnected by communication and data channels and other networking technology, using wired and/or wireless connections. Data items are exchanged between the electronic device 102, as a client, and the server 100 through the network 101. The data items that are exchanged between the electronic device 102 and the server 100 may include inbox items, folders, calendar data, contacts, and so on. A two way communication between the server 100 and the electronic device 102 may be performed through the network 101. The data items in the server 100 may be automatically updated or synchronized to the electronic device 102 during a predefined time interval which may be set by the user of the electronic device 102. The network 101 for communication between the server 100 and the electronic device 102 may be the Internet and/or other networks and systems.

In an embodiment, the electronic device 102 may be a mobile phone, a personal digital assistant (PDA), a tablet, a laptop, and so on.

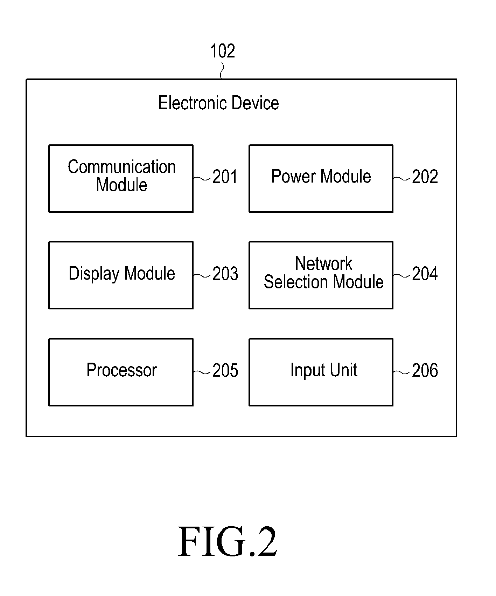

FIG. 2 illustrates a block diagram of the electronic device that includes various modules for communication and/or data processing, according to embodiments of the disclosure. As shown in FIG. 2, the electronic device 102 includes at least a communication module 201, a power module 202, a display module 203, a network selection module 204, a processor 205, and an input unit 206. The communication module 201 of the electronic device 102 is used to communicate with the server 100 for synchronizing the data items used by the electronic device 102 and/or the server 100. The power module 202 holds the battery information and power status of the electronic device 102. The battery information includes the amount of charge that the electronic device has, the time period for which the electronic device may be in operation, and so on. The display module 203 of the electronic device 102 provides a user interface to the user, such as a display, a touch screen, and/or other output devices. The user interface allows the user to input data into the electronic device 102 and to select, control, and operate functions of the electronic device 102. The display module 203 is used to display information to the user to input the preset sync interval time to sync data between the server 100 and the electronic device 102. The network selection module 204 in the electronic device 102 receives a selection by the user, for example, through the input unit 206, to select a particular network for synchronizing the data items between the server 100 and the electronic device 102. The processor 205 processes data and executes applications and programs to implement the method and system of the disclosure. The input unit 206 receives inputs from the user, which are processed by the processor 205. For example, the input unit 206 and the display module 203 may, in conjunction, implement a touch screen.

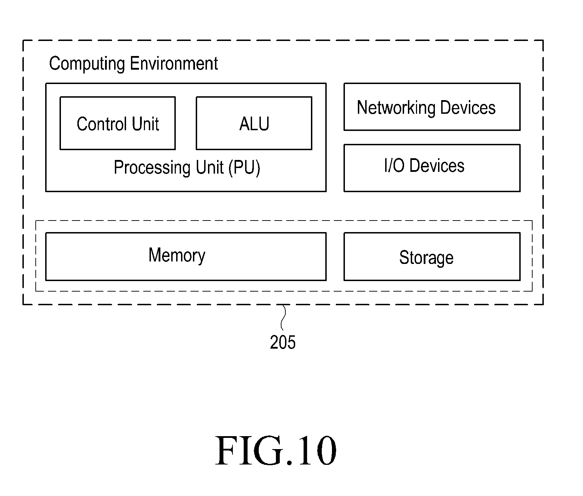

The processor 205 may include a control unit, a central processing unit (CPU), a microprocessor, etc., and may be implemented by an integrated circuit (IC). The processor 205 may include various components as shown in FIG. 10, and may operate with the components 201-204 and 206 of FIG. 2.

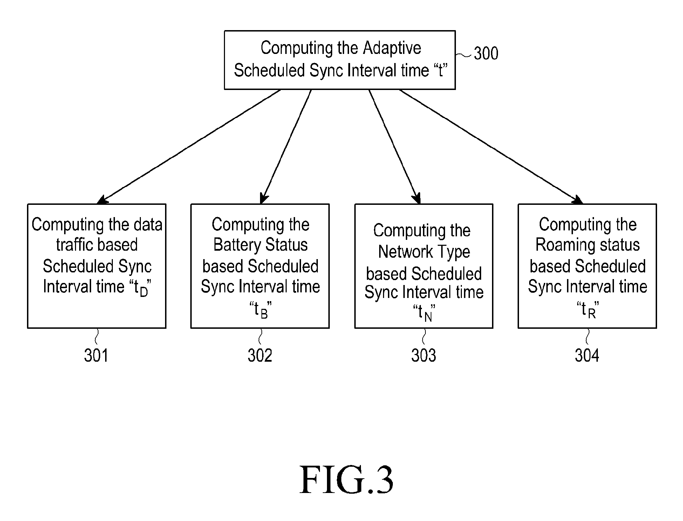

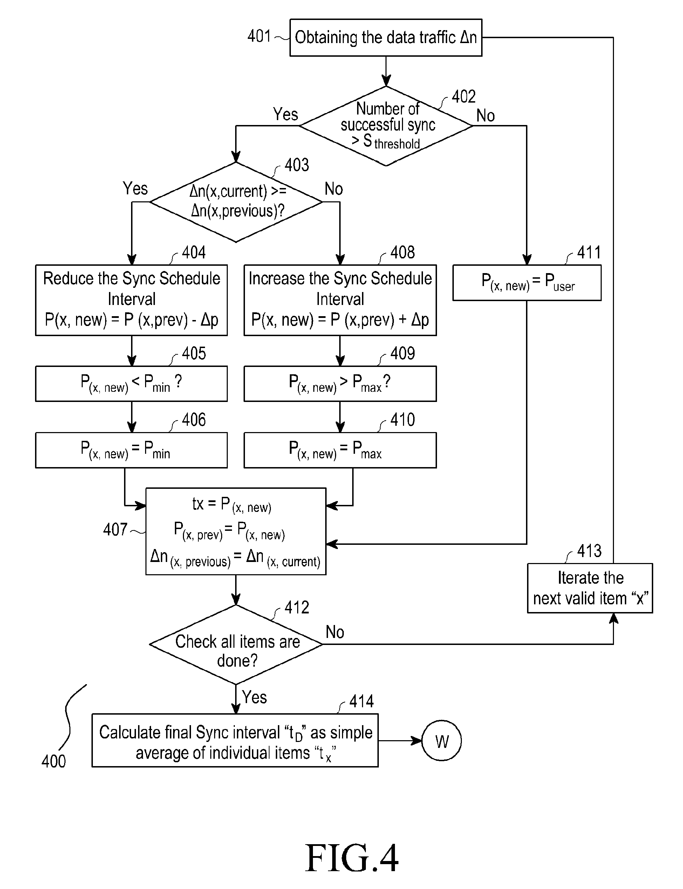

FIG. 3 illustrates a flow diagram representing the overview of computing the scheduled sync interval, according to embodiments of the disclosure. As shown in FIG. 3, the Adaptive Scheduled Sync Interval "t" is computed in step 300 by dividing the entire method into, for example, four sub-divisions by using each parameter that may influence the scheduled sync interval. In the method of the disclosure, the adaptive scheduled sync interval "t" depends on the parameters including data traffic, battery status, network status, and roaming status. Depending on the four parameters, the adaptive scheduled sync interval is calculated individually by using four different methods. As shown in FIG. 3, the data traffic based scheduled sync interval "$t_D$" is computed separately in step 301. The battery status based scheduled sync interval time "$t_B$" is computed separately in step 302. Also, the network type based scheduled sync interval time "$t_N$" is computed separately in step 303. The roaming based scheduled sync interval time "$t_R$" is computed separately in step 304. The flow chart for calculating the scheduled sync interval based on each of the parameters has been divided into multiple flow charts shown in FIGS. 4-7, respectively, for illustrating the disclosure.

FIG. 4 illustrates a flow diagram representing the method 400 of computing the scheduled sync interval '$t_D$' based on previous data traffic, according to embodiments of the disclosure. The symbols in FIG. 4 are described for better understanding of the flowchart.

x refers to the collection or item class, whose next sync interval time is to be determined. $S_{threshold}$ represents the total number of initial sync cycles after which the method is to be activated and used to determine the next sync interval time.

$\Delta n(x, current)$ refers to the total data traffic recorded in the current transaction for the item "x". $\Delta n(x, previous)$ is the total data traffic recorded for the previous transaction for the item "x".

$P_{min}$ and $P_{max}$ are two threshold values which determine the lower and upper limits for the sync interval times, respectively. $P_{user}$ refers to the user set regular sync interval time for all collections or items.

$t_x$ refers to a next computed sync interval time for the item "x". $\Delta p$ represents the amount by which the sync interval is modified successfully, according to the embodiments of the disclosure.

The method 400 initially obtains the data traffic in step 401 that has been recorded in the last successful transaction for a collection or item x. Then the method 400 calculates the data traffic $\Delta n$ for the purpose of determining the scheduled sync interval. Further, the method 400 checks, in step 402, whether the number of successful syncs performed is greater than the $S_{theshold}$. If the number of successful syncs is greater than the $S_{threshold}$, then method 400 checks, in step 403, whether the current data traffic is greater than or equal to the previous data traffic for the last successful transaction that has been recorded. If the method 400 determines that the current data traffic is more than the last transaction, then the method reduces, in step 404, the scheduled sync interval by an amount of $\Delta p$ from $P_{(x,prev)}$. Further, the method 400 checks, in step 405, whether the reduced time interval $P_{(x, new)}$ is less than the $P_{min}$, which is the lower threshold limit for the sync interval time. If not, step 405 is repeated to reduce the scheduled sync interval by an amount of $\Delta p$ until $P_{(x, new)}$ is less than the threshold value of the sync interval time, then the method 400 sets the $P_{(x, new)}$ to the $P_{min}$ in step 406. The method 400 further sets the parameters

$$t_x = P_{(x, new)}$$

$$P_{(x, prev)} = P_{(x, new)}$$

$$\Delta n_{(x, previous)} = \Delta n_{(x, current)}$$

in step 407, and the method 400 proceeds to step 412.

Referring back to step 403, the method 400 identifies if the current data traffic is less than the previous data traffic for the last successful transaction that has been recorded. If so, then the method increases the scheduled sync interval in step 408 by adding an amount of $\Delta p$ to $P_{(x, prev)}$. Further, the method checks, in step 409, whether the increased time interval $P_{(x, new)}$ is greater than $P_{max}$, which is the upper threshold limit for the sync interval time. If not, step 409 is repeated to increase the scheduled sync interval by an amount of $\Delta p$ until $P_{(x, new)}$ is greater than the threshold value of the sync interval time, then the method 400 sets the $P_{(x, new)}$ to the $P_{max}$ in step 410 and then the method 400 executes step 407.

Referring back to step 402, if the method 400 determines that the number of successful syncs performed is not greater than the $S_{threshold}$, then the method sets $P_{(x, new)}$ to $p_{user}$ in step 411, and then the method 400 executes step 407.

Once the step 407 is executed, the method 400 checks, in step 412, whether the next sync interval $t_x$ has been computed for all the items x. Further, if the method 400 determines that some items are left to be computed, the method 400 iterates to the next valid item "x" in step 413 and redirects the method 400 to perform step 401 for calculating the corresponding sync interval "$t_x$" Once

all the items are done as determined in step 412, the method 400 finally calculates 414 the data traffic based final Sync interval "$t_D$" in step 414 as a simple average of all sync intervals "$t_x$" for all individual items x. In FIG. 4, this final calculated value is represented as W. The various steps in method 400 may be performed in the order presented, or in a different order, or simultaneously. Further, in some embodiments, some of the steps listed in FIG. 4 may be omitted.

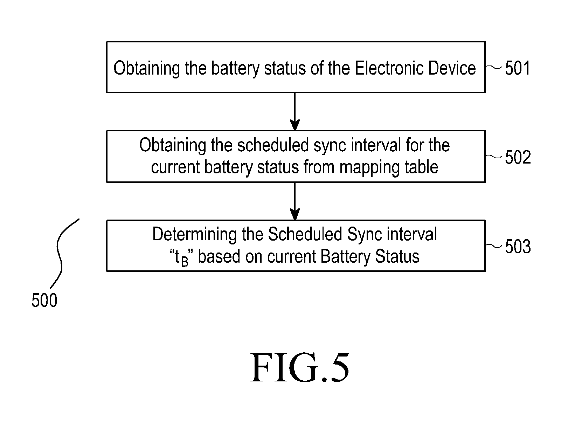

FIG. 5 illustrates a flow diagram representing the method 500 of computing the scheduled sync interval '$t_B$' based on current battery status on the electronic device 102, according to the embodiments of the disclosure. As shown in FIG. 5, the method 500 initially obtains, in step 501, the battery status of the electronic device 102. Battery status refers to the amount of the power/back-up time left for operating the electronic device 102. In an embodiment, the battery status is indicated in terms of a percentage of power stored within the electronic device 102. Further, the method obtains, in step 502, the scheduled sync interval for the current battery status using a predetermined mapping table, which is pre-defined or assigned by the user, and which may be stored in a memory or storage of the electronic device 102, for example, in the memory or storage in FIG. 10. The mapping table includes information for a battery level that corresponds to the time interval as defined by the user or pre-defined. An example of a mapping table for obtaining the battery status is shown in Table 1.

TABLE 1

| Battery Level | Sync Interval Time |
|---------------|--------------------|
| 1 (20%) | $T_1$ |
| 2 (40%) | $T_2$ |
| 3 (x%) | $T_3$ |
| N (100%) | $T_n$ |

In Table 1, $T_1$ represents the sync interval time when the battery status of the device is 20% and $T_2$ represents the sync interval time, when the battery status of the device is 40%, and so on.

The method determines, in step 503, the scheduled sync interval "$t_B$" based on the current battery status using the mapping table in Table 1.

In one embodiment, 20% battery status corresponds to sync interval time "$T_1$" which will be more when compared to the sync interval time "$T_2$" at 40% battery status, so as to reduce the frequency of syncs and hence save as much power of the electronic device 102 as possible. If the battery status of the electronic device 102 has decreased, then the corresponding sync interval time will be increased. Further, if the battery status of the electronic device 102 is high, then the corresponding sync interval times $t_n$ will be reduced, so as to allow as many syncs as possible, although the number of syncs may be bound to a pre-defined limit and other modules time intervals, since power is no longer a major constraint.

In an embodiment, the mapping table in Table 1 for obtaining the battery status to calculate the sync interval time "$t_B$" may also include default weights assigned by the user, for example, by inputs of the user using the input unit 206. These default weights are used for calculating the final sync interval using all four parameters of the disclosure. The various steps in the method 500 may be performed in the order presented, in a different order, or simultaneously. Further, in some embodiments, some of the steps listed in FIG. 5 may be omitted.

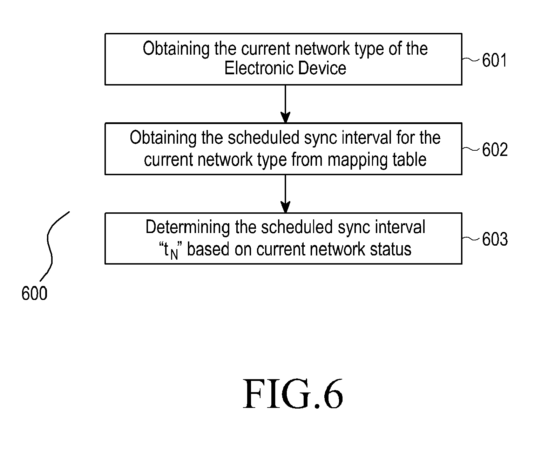

FIG. 6 illustrates a flow diagram representing the method 600 of computing the scheduled sync interval '$t_N$' based on the current network type of the electronic device 102, according to the embodiments of the disclosure. As shown in FIG. 6, the method 600 obtains, in step 601, the current network type of the electronic device 102. Further, the method 600 obtains, in step 602, the scheduled sync interval for the current network type from a predetermined mapping table, which may be stored in a memory or storage of the electronic device 102, for example, in the memory or storage in FIG. 10. The mapping table includes the network type associated with the sync interval time. An example of a mapping table for obtaining the network type to calculate the sync interval time "$t_N$" is as shown in Table 2.

TABLE 2

| Network Type | Sync Interval Time |
|--------------|--------------------|
| Type1 (2G) | $T_1$ |
| Type2 (3G) | $T_2$ |
| Type 3 (Wi-Fi) | $T_3$ |
| Type N (x) | $T_n$ |

In Table 2, $T_1$ represents the sync interval time when the network type of the electronic device(102) is a second generation (2G) network, and $T_2$ represents the sync interval time, when the network type of the device is a third generation (3G) network and so on. The network type represents the network currently being used by electronic device 102.

The method determines, in step 603, the scheduled sync interval "$t_N$" based on the current network status of the electronic device 102 using the mapping table in Table 2.

The sync interval time differs for each network used by the user of the electronic device 102. For example, the sync interval time may be greater for the 2G network and may be less compared to the 3G network and may be even lesser for network using WI-FI, a wireless technology for data exchange over a computer network, commercially available from the WI-FI ALLIANCE, and so on.

In an embodiment, the mapping table in Table 2 for obtaining the network type to calculate the sync interval time "$t_N$" may also include default weights assigned by the user. These default weights are used for calculating the final sync interval using all four parameters of the disclosure. The various steps in the method 600 may be performed in the order presented, in a different order, or simultaneously. Further, in some embodiments, some of the steps listed in FIG. 6 may be omitted.

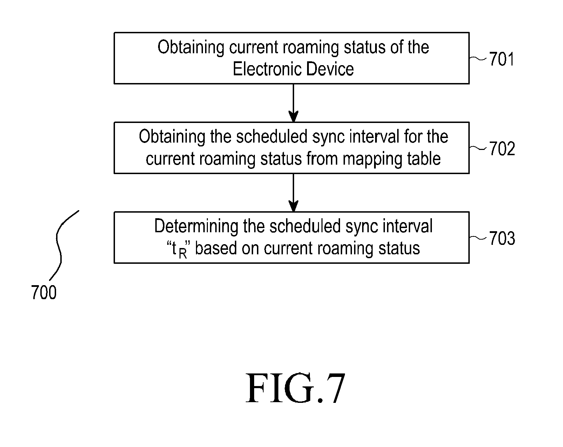

FIG. 7 illustrates a flow diagram representing the method 700 of computing the scheduled sync Interval '$t_R$' based on a current roaming status of the electronic device 102, according to the embodiments of the disclosure. As shown in FIG. 7, the method 700 obtains, in step 701, the current roaming status of the electronic device 102. Then the method 700 obtains, in step 702, the sync interval for the current roaming status from a predetermined mapping table, stored in a memory or storage of the electronic device 102, for example, in the memory or storage in FIG. 10. The mapping table may include the roaming status associated with the sync interval time. An example of a mapping table for obtaining the roaming status to calculate the sync interval time "$t_R$" is shown in Table 3.

TABLE 3

| Roaming Status | Sync Interval Time |
| --- | --- |
| Home Network | $T_1$ |
| Roaming | $T_2$ |

In Table 3, $T_1$ represents the sync interval time when the electronic device 102 is within a home network, and $T_2$ represents the sync interval time when the electronic device 102 is roaming out of the home network. In an embodiment, the electronic device 102 may access the home network in a particular city, state, province, country, or region, and so when the electronic device 102 moves out of the home network, then the electronic device 102 will be in a roaming state.

The method 700 determines, in step 703, the sync interval time "$t_R$" based on the roaming status of the electronic device 102 using the mapping table in Table 3.

In one embodiment, the sync interval time differs based on the roaming status of the user of the electronic device 102. For example, the sync interval time may be less for the home network and may be more when the user of the electronic device 102 is roaming.

In an embodiment, the mapping table in Table 3 for obtaining the roaming status to calculate the sync interval time "$t_R$" may include default weights assigned by the user. These default weights are used for calculating the final sync interval using all four parameters of the disclosure. The various steps in the method 700 may be performed in the order presented, in a different order, or simultaneously. Further, in some embodiments, some of the steps listed in FIG. 7 may be omitted.

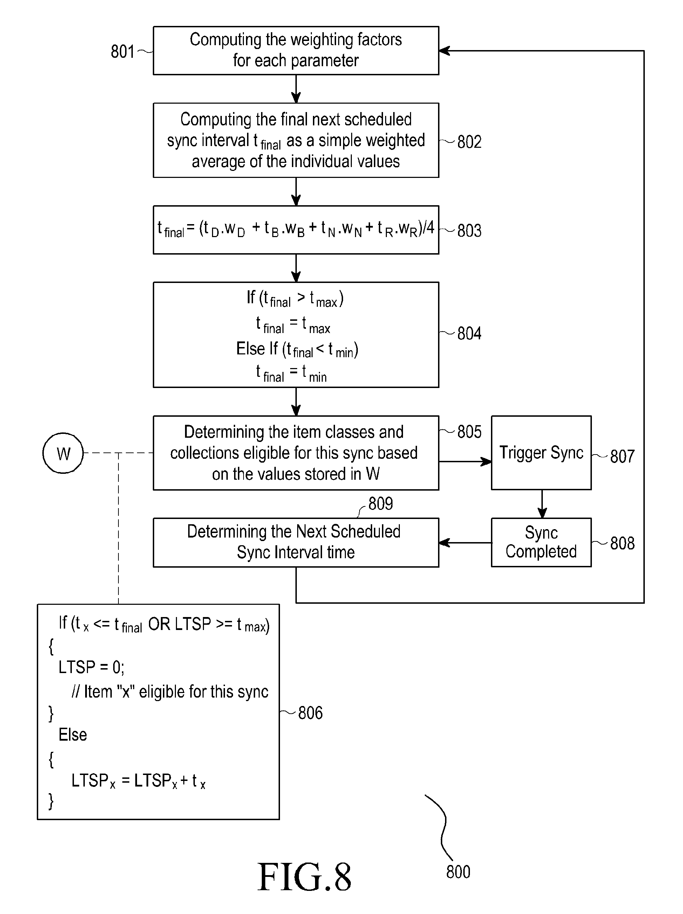

FIG. 8 illustrates a flow diagram representing the method 800 of computing a final scheduled sync interval, according to the embodiments of the disclosure. As shown in FIG. 8, the method 800 obtains, in step 801, weighting factors for each of the parameters from a mapping table, as shown in Table 4. In one embodiment, the weighting factors are pre-defined by the user, and stored in a memory or storage of the electronic device 102, for example, in the memory or storage in FIG. 10. Then the method 800 computes, in step 802, the final next scheduled sync interval "$t_{final}$" as a weighted average of individual values that are calculated by using the methods 400, 500, 600, 700 shown in FIGS. 4-7, respectively, of the disclosure. Further, the method 800 calculates the $t_{final}$ in step 803, the next scheduled sync interval by multiplying the individually computed sync intervals $t_D$, $t_B$, $t_N$, and $t_R$ with each of the corresponding weighting factors in Table 4, and further the method 800 evaluates the average of the result.

An example of a mapping table with each parameter associated with corresponding weighting factor is shown in Table 4.

TABLE 4

| Parameter | Weighting factor |
| --- | --- |
| Data traffic | $w_D$ |
| Battery status | $w_B$ |
| Network type | $w_N$ |
| Roaming status | $w_R$ |

The mapping table in Table 4 includes all four parameters including: data traffic, battery status, network type, and roaming status, and their corresponding weighting factors $w_D$, $w_B$, $w_N$ and $w_R$, respectively. In one embodiment, these weighting factors can be pre-defined or user defined.

Further, the method 800 checks, in step 804, whether the calculated final next scheduled sync interval is greater than "$t_{max}$", which is the threshold limit for the sync interval time. If so, then the method 800 limits the final next scheduled sync interval to "$t_{max}$". Otherwise, in step 804, if the method 800 determines that the calculated final next scheduled sync interval is less than "$t_{min}$", then the method 800 limits the final next scheduled sync interval to "$t_{min}$".

Then the method 800 determines, in step 805, the item classes and collections eligible for the calculated sync interval based on the values stored in W, determined in the method 400 in FIG. 4. In performing step 805, the method 800 also checks, in step 806, whether the next computed sync interval time for the item "x", represented by "$t_x$", is less than or equal to the final next scheduled sync interval "$t_{final}$", or if a LongTermSyncPending (LTSP) parameter for a corresponding item x is greater than or equal to "$t_{max}$". If the method 800 determines that either of the conditions in step 806 is valid, then the method 800 sets the LongTermSyncPending (LTSP) parameter to zero, which indicates that the corresponding item "x" is eligible for this sync. Further, if the method 800 determines that either of the conditions in step 806 invalid, then that item "x" is omitted from the next sync, and the method 800 will also update the LongTermSyncPending (LTSP) for the corresponding item "x", represented by "$LTSP_x$". The method 800 adds "$t_x$" to $LTSP_x$ and sets the summation to "$LTSP_x$". The usage of $LTSP_x$ causes any successively omitted item x to be definitely synced at least once every "$t_{max}$" amount of time. Then the step 805 is completed, and the method 800 proceeds to step 807.

Upon expiration of the final time interval "$t_{final}$", the method 800 triggers, in step 807, the sync of operations of the electronic device 102 and the server 100, such as syncing with the eligible items, for example, using the communication module 201 in FIG. 2, and once the sync is completed by the method 800 in step 808, the method 800 determines, in step 809, the next scheduled sync interval time by looping back to step 801 and executing steps 801-806 again. in which the method 800 again computes the Adaptive Scheduled Sync Interval time "t" using the method 300 in FIG. 3. The various steps in the method 800 may be performed in the order presented, in a different order, or simultaneously. Further, in some embodiments, some of the steps listed in FIG. 8 may be omitted.

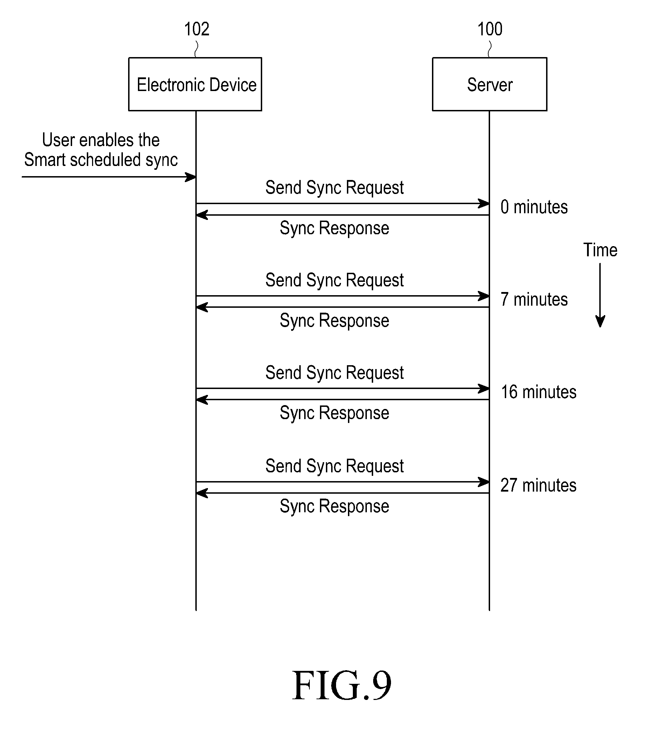

FIG. 9 illustrates a schematic diagram illustrating the implementation of an adaptive sync interval time, according to the embodiments of the disclosure. As shown in FIG. 9, the user of the electronic device 102 enables the scheduled sync within the electronic device 102, and sends a sync request initially, i.e. the sync request will be sent to the server 100 from the electronic device 102 at the time index of zero minutes, and obtains the response for the request from the server 100. Further, the user runs the scheduled sync method of the disclosure to determine the next sync interval, and according to the obtained sync interval, once again the user sends the sync request to the server 100 and obtains the response. The methods of FIGS. 3-8 are performed cyclically according to the next scheduled sync interval as determined by the method of the disclosure. As shown in FIG. 9, the method of sending the sync request and obtaining the sync response may occur at the time intervals of, for example, 0, 7, 16, 27 minutes, respectively. Further, the sync interval may be adaptively changed depending on the data traffic and other parameters, as described herein, for example, as the battery status changes, as the specific network is switched, and as the electronic device 102 moves from the home network to roaming or from roaming back to the home network. Also when compared with an existing system in the related art in which the sync interval is pre-set, for example, for every 5 minutes, within 30 minutes of time, 6 sync requests will be sent to the server 100 and among these sync requests, some will be un-successful sync requests and will result in no data exchange. The method of the disclosure may result in, for example, only 4 sync requests, and also may result in fewer empty sync responses. Using the method of the disclosure, the sync interval can dynamically vary the next scheduled sync interval and can also optimize the time interval for a scheduled sync between the entities.

In one embodiment, the method of the disclosure shown in FIG. 9 may be performed automatically without user input; for example, if the user sets the electronic device 102 to perform a smart scheduled sync automatically, or if the default sync setting determined at the time of manufacture of the electronic device 102 is set to perform a smart scheduled sync automatically. Accordingly, the electronic device 102 may operate such adaptive scheduled syncs with the server 100 without a command from the user.

In addition, in one embodiment, the method of the disclosure shown in FIGS. 3-9 may be performed between a plurality of electronic devices 102 connected through a network, in which the plurality of electronic devices 102 does not include a server. Accordingly, different electronic devices 102 may synchronize with each other using the method of the disclosure

FIG. 10 illustrates a computing environment for implementing the disclosure, according to the embodiments of the disclosure. As shown in FIG. 10, the computing environment may be included in the processor 205 in the electronic device 102, shown in FIG. 2, and may include at least one processing unit that is equipped with a control unit and an Arithmetic Logic Unit (ALU), a memory, a storage unit, a plurality of networking devices, and a plurality Input output (I/O) devices. The processing unit is responsible for processing the instructions of the method of the disclosure. The processing unit receives commands from the control unit in order to perform its processing. Further, any logical and arithmetic operations involved in the execution of the instructions are computed using the ALU.

The overall computing environment may include multiple homogeneous and/or heterogeneous cores, multiple CPUs of different kinds, special media and other accelerators. The processing unit is responsible for processing the instructions of the method of the disclosure. The processing unit receives commands from the control unit in order to perform the method of the disclosure. Further, any logical and arithmetic operations involved in the execution of the instructions are computed using the ALU. Further, a plurality of processing units may be used which are located on a single chip or on multiple chips.

In addition, the server 100 may also implement the components as shown in FIGS. 2 and 10 to perform the system, apparatus, and method of the disclosure instead of or in addition to the electronic device 102.

The method of the disclosure may include instructions and codes used by the disclosure which are stored in either the memory unit or the storage or both of the processor 205 in FIG. 10. At the time of execution, the instructions may be fetched from the corresponding memory and/or storage, and executed by the processing unit.

In case of any hardware implementations, various networking devices or external I/O devices may be connected to or included in the computing environment of FIG. 10, for example, to support the implementation of the communication module 201, the network selection module 204, and the input unit 206 of FIG. 2 through the networking unit and the I/O device unit, respectively, of FIG. 10.

The embodiments of the disclosure include at least one software program running on at least one hardware device and performing network management functions to control the elements. The elements and components shown in FIGS. 1, 2 and 10 include blocks which can be at least one of a hardware device, or a combination of hardware device and software module.

The apparatuses and methods of the disclosure can be implemented in hardware or firmware, or as software or computer code executed by hardware or firmware, or combinations thereof. Various components such as a controller, a central processing unit (CPU), a processor, and any unit or device of the disclosure includes at least hardware and/or other physical structures and elements. In addition, the software or computer code can also be stored in a non-transitory recording medium such as a CD ROM, a RAM, a ROM whether erasable or rewritable or not, a floppy disk, CDs, DVDs, memory chips, a hard disk, a magnetic storage media, an optical recording media, or a magneto-optical disk or computer code downloaded over a network originally stored on a remote recording medium, a computer readable recording medium, or a non-transitory machine readable medium and to be stored on a local recording medium, so that the methods of the disclosure can be rendered in such software, computer code, software modules, software objects, instructions, applications, applets, apps, etc. that is stored on the recording medium using a general purpose computer, a digital computer, or a special processor or in programmable or dedicated hardware, such as an ASIC or FPGA. As would be understood in the art, the computer, the processor, the microprocessor controller, or the programmable hardware include volatile and/or non-volatile storage and memory components, e.g., RAM, ROM, Flash, etc. that may store or receive software or computer code that, when accessed and executed by the computer, processor or hardware, implement the processing methods of the disclosure. In addition, it would be recognized that when a general purpose computer accesses code for implementing the processing of the disclosure, the execution of the code transforms the general purpose computer into a special purpose computer for executing the processing of the disclosure. In addition, the program may be electronically transferred through any medium such as communication signals transmitted by wire/wireless connections, and their equivalents. The programs and computer readable recording medium can also be distributed in network-coupled computer systems so that the computer readable code is stored and executed in a distributed fashion.

Although the disclosure been discussed, various modifications may be included in the disclosure without departing from the disclosure. Therefore, the disclosure is not limited to the embodiments but defined by the appended claims and the equivalents thereof.

**Claims**

1. A method comprising:

   determining a status of a parameter of a specific electronic entity of a plurality of electronic entities;
   computing a scheduled sync interval based on the parameter;
   identifying a weighting factor for the parameter;
   estimating a next sync interval adaptively based on the weighting factor and the computed sync interval for the parameter;
   performing at least one of selection or omission of an item adaptively in the sync interval based on the parameter; and
   synchronizing operation of the plurality of electronic entities with the item in the sync interval.

2. The method as in claim 1, wherein the electronic entities include at least one of a server or an electronic device.

3. The method as in claim 1, wherein the parameter includes at least one of data traffic, battery status, network type, or roaming.

4. The method as in claim 1, wherein the status comprises at least one of a current value of the parameter or a previous value of the parameter.

5. The method as in claim 1, wherein the computing of the scheduled sync interval comprises mapping the status of the parameter with a pre-defined scheduled sync interval.

6. A system comprising:

   a processor:

      determining a status of a parameter of the system;
      computing a scheduled sync interval based on the parameter;
      identifying a weighting factor for the parameter;
      estimating a next sync interval adaptively based on the weighting factor and the computed sync interval for the parameter; and performing at least one of selection or omission of an item adaptively in the sync interval based on the parameter; and

a communication module synchronizing operation of the system and an electronic entity with the item in the sync interval.

7. The system as in claim 6, wherein each of the system and the electronic entity include at least one of a server or an electronic device.

8. The system as in claim 6, wherein the parameter includes at least one of data traffic, battery status, network type, or roaming.

9. The system as in claim 6, wherein the status comprises at least one of a current value of the parameter or a previous value of the parameter.

10. The system as in claim 6, wherein the computing of the scheduled sync interval comprises mapping the status of the parameter with a pre-defined scheduled sync interval.

11. A non-transitory computer readable medium including program instructions which, when executed by a processor, cause the processor to perform a method comprising:

determining a status of a parameter of a specific electronic entity of a plurality of electronic entities, wherein the parameter comprises at least one of data traffic or a battery status;
computing a scheduled sync interval based on the parameter;
identifying a weighting factor for the parameter;
estimating a next sync interval adaptively based on the weighting factor and the computed sync interval for the parameter;
performing at least one of selection or omission of the items adaptively in the sync interval based on the parameter; and
synchronizing operation of the plurality of electronic entities with the item in the sync interval.

12. An electronic device comprising:

a processor including:

a processing unit; and
a memory having a computer program code, wherein the processing unit executing the computer program code:

determines a status of a parameter including at least one of data traffic or a battery status of the electronic device;
computes a scheduled sync interval based on the parameter;
identifies a weighting factor for the parameter;
estimates a next sync interval adaptively based on the weighting factor and the computed sync interval for the parameter; and
performs at least one of selection or omission of an item adaptively in the sync interval based on parameter; and

a communication module for synchronizing operation of the electronic device with another electronic device with the item in the sync interval.

13. The electronic device as in claim 12, wherein the electronic device detects at least one of a network type or roaming parameters.

14. The electronic device as in claim 12, wherein the electronic device detects at least one of a current value of the parameter or a previous value of the parameter.

15. The electronic device as in claim 12, wherein the electronic device computes the scheduled sync interval by mapping the status of the parameter with a pre-defined scheduled sync interval.

Server ~100

Network ~101

Electronic Device ~102

FIG.1

102

Electronic Device

| Communication Module | ~201 |
| Power Module | ~202 |

| Display Module | ~203 |
| Network Selection Module | ~204 |

| Processor | ~205 |
| Input Unit | ~206 |

FIG.2

Computing the Adaptive
Scheduled Sync Interval time "t" ~300

Computing the data
traffic based
Scheduled Sync
Interval time "$t_D$"

301

Computing the
Battery Status
based Scheduled
Sync Interval time
"$t_B$"

302

Computing the
Network Type
based Scheduled
Sync Interval time
"$t_N$"

303

Computing the
Roaming status
based Scheduled
Sync Interval time
"$t_R$"

304

FIG.3

FIG.4

Obtaining the battery status of the Electronic Device ~501

Obtaining the scheduled sync interval for the current battery status from mapping table ~502

Determining the Scheduled Sync interval "$t_B$" based on current Battery Status ~503

500

# FIG.5

Obtaining the current network type of the Electronic Device ∼601

Obtaining the scheduled sync interval for the current network type from mapping table ∼602

Determining the scheduled sync interval "$t_N$" based on current network status ∼603

600

# FIG.6

| Obtaining current roaming status of the Electronic Device | ~701 |

$\downarrow$

| Obtaining the scheduled sync interval for the current roaming status from mapping table | ~702 |

$\downarrow$

| Determining the scheduled sync interval "$t_R$" based on current roaming status | ~703 |

700

# FIG.7

801 — Computing the weighting factors for each parameter

Computing the final next scheduled sync interval $t_{final}$ as a simple weighted average of the individual values ~802

$t_{final} = (t_D.w_D + t_B.w_B + t_N.w_N + t_R.w_R)/4$ ~803

If $(t_{final} > t_{max})$
$t_{final} = t_{max}$
Else If $(t_{final} < t_{min})$
$t_{final} = t_{min}$
~804

W

Determining the item classes and collections eligible for this sync based on the values stored in W ~805

Trigger Sync ~807

809

Determining the Next Scheduled Sync Interval time

Sync Completed ~808

If $(t_x <= t_{final}$ OR LTSP $>= t_{max})$
{
  LTSP = 0;
      // Item "x" eligible for this sync
}
  Else
{
    $LTSP_x = LTSP_x + t_x$
}
~806

FIG.8

800

102                                                    100

┌─────────────────────┐                    ┌─────────────────────┐
│  Electronic Device  │                    │       Server        │
└─────────────────────┘                    └─────────────────────┘

User enables the
Smart scheduled sync

Send Sync Request → 0 minutes

← Sync Response

Time ↓

Send Sync Request → 7 minutes

← Sync Response

Send Sync Request → 16 minutes

← Sync Response

Send Sync Request → 27 minutes

← Sync Response

FIG.9

Computing Environment

Control Unit | ALU

Processing Unit (PU)

Networking Devices

I/O Devices

Memory

Storage

205

# FIG.10

Europäisches
Patentamt

European
Patent Office

Office européen
des brevets

# EUROPEAN SEARCH REPORT

Application Number

EP 13 17 6299

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/263227 A1 (ROBERTS MICHAEL PATRICK [CA] ET AL) 23 October 2008 (2008-10-23) * paragraphs [0029] - [0068] * * figure 1 * ----- | 1-15 | INV. H04L29/08 |
| X | US 2006/171523 A1 (GREENWELL THOMAS R E [GB] GREENWELL THOMAS RALPH EDWARDS [GB] ET AL) 3 August 2006 (2006-08-03) * paragraphs [0006] - [0107] * * paragraphs [0186] - [0209] * ----- | 1-15 | |
| X | US 2007/238440 A1 (SENGUPTA UTTAM [US] ET AL) 11 October 2007 (2007-10-11) * paragraphs [0036] - [0042] * * paragraphs [0051] - [0064] * * figures 4,7,11 * ----- | 1-15 | |

| TECHNICAL FIELDS SEARCHED (IPC) |
|---|
| H04L G06F H04W |

The present search report has been drawn up for all claims

| Place of search | Date of completion of the search | Examiner |
|---|---|---|
| Munich | 19 November 2013 | Veloso González, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 685 698 A1

**ANNEX TO THE EUROPEAN SEARCH REPORT
ON EUROPEAN PATENT APPLICATION NO.**

EP 13 17 6299

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2013

| Patent document cited in search report | | Publication date | Patent family member(s) | | Publication date |
|---|---|---|---|---|---|
| US 2008263227 | A1 | 23-10-2008 | US | 2008263227 A1 | 23-10-2008 |
| | | | US | 2012131182 A1 | 24-05-2012 |
| | | | WO | 2008133863 A1 | 06-11-2008 |
| US 2006171523 | A1 | 03-08-2006 | AU | 2003290306 A1 | 14-07-2004 |
| | | | EP | 1576784 A1 | 21-09-2005 |
| | | | GB | 2397474 A | 21-07-2004 |
| | | | JP | 2006511134 A | 30-03-2006 |
| | | | US | 2006171523 A1 | 03-08-2006 |
| | | | WO | 2004057828 A1 | 08-07-2004 |
| US 2007238440 | A1 | 11-10-2007 | US | 2007238440 A1 | 11-10-2007 |
| | | | US | 2010235504 A1 | 16-09-2010 |
| | | | US | 2012005511 A1 | 05-01-2012 |
| | | | US | 2013013948 A1 | 10-01-2013 |

EPO FORM P0459

For more details about this annex : see Official Journal of the European Patent Office, No. 12/82

22